(19) Europäisches Patentamt
European Patent Office
Office européen des brevets

(11) Veröffentlichungsnummer: **0 138 158**
**A1**

(12) # EUROPÄISCHE PATENTANMELDUNG

(21) Anmeldenummer: **84111851.6**

(22) Anmeldetag: **04.10.84**

(51) Int. Cl.⁴: **C 07 F 9/40**, C 07 F 9/58, A 01 N 57/18

(30) Priorität: **15.10.83 DE 3337540**

(43) Veröffentlichungstag der Anmeldung: **24.04.85 Patentblatt 85/17**

(84) Benannte Vertragsstaaten: **CH DE FR GB IT LI**

(71) Anmelder: **BAYER AG, Konzernverwaltung RP Patentabteilung, D-5090 Leverkusen 1 Bayerwerk (DE)**

(72) Erfinder: **Pfister, Theodor, Dr., Lichtenbergerstrasse 30, D-4019 Monheim (DE)**
Erfinder: **Eue, Ludwig, Dr., Paul-Klee-Strasse 36, D-5090 Leverkusen 1 (DE)**
Erfinder: **Schmidt, Robert R., Dr., Im Waldwinkel 110, D-5060 Bergisch-Gladbach 2 (DE)**

(54) **Phenoxypropionylphosphonsäureester.**

(57) Neue Phenoxypropionylphosphonsäureester der Formel

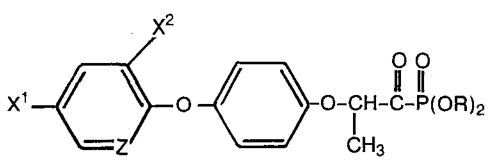

(I)

in welcher
$X^1$ für Halogen oder Trifluormethyl steht,
$X^2$ für Wasserstoff, Halogen oder Trifluormethyl steht,
Z für Stickstoff, eine -CH- oder -CCl-Gruppierung steht und
R für Alkyl oder Halogenalkyl steht,
ein Verfahren zur Herstellung der neuen Stoffe und deren Verwendung als Herbizide.

EP 0 138 158 A1

0138158

BAYER AKTIENGESELLSCHAFT 5090 Leverkusen, Bayerwerk

Konzernverwaltung RP
Patentabteilung Dü/ABc

Ia

Phenoxypropionylphosphonsäureester

Die Erfindung betrifft neue Phenoxypropionylphosphonsäureester, ein Verfahren zu ihrer Herstellung und ihre Verwendung als Herbizide.

Es ist bereits bekannt geworden, daß zahlreiche Phenoxypropionsäure-Derivate herbizide Eigenschaften besitzen (vgl. z.B. DE-OS 22 23 894). So kann zum Beispiel der 2-[4-(2,4-Dichlorphenoxy)-phenoxy]-propionsäuremethylester zur Unkrautbekämpfung eingesetzt werden. Die Wirkung dieses Stoffes ist jedoch insbesondere beim Einsatz niedriger Aufwandmengen nicht immer ausreichend.

Es wurden nun neue Phenoxypropionylphosphonsäureester der Formel (I),

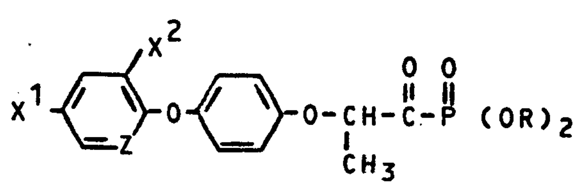

(I)

in welcher

$X^1$ für Halogen oder Trifluormethyl steht,

$X^2$ für Wasserstoff, Halogen oder Trifluormethyl steht,

Z für Stickstoff, eine -CH- oder -CCl-Gruppierung steht und

R für Alkyl oder Halogenalkyl steht,

gefunden.

Die neuen Phenoxypropionylphosphonsäureester der Formel (I) stehen in einem tautomeren Gleichgewicht mit Verbindungen der Formel (Ia):

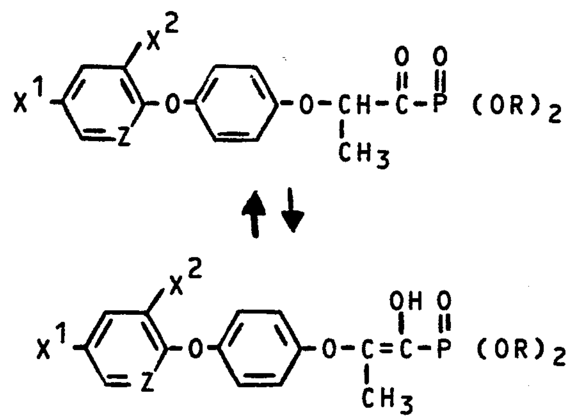

(I)

(Ia)

Weiterhin wurde gefunden, daß man die neuen Phenoxypropionylphosphonsäureester der Formel (I) erhält, wenn man Phenoxypropionsäurechloride der Formel (II),

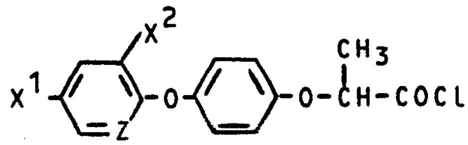

(II)

in welcher
$X^1$, $X^2$ und Z die oben angegebenen Bedeutungen haben,

mit Phosphorigsäureestern der Formel (III),

$$P(OR)_3 \qquad (III)$$

in welcher
R die oben angegebene Bedeutung hat,

gegebenenfalls in Gegenwart von Verdünnungsmitteln umsetzt.

Schließlich wurde gefunden, daß sich die neuen Phenoxypropionylphosphonsäureester der Formel (I) durch eine hervorragende herbizide Wirksamkeit auszeichnen.

Überraschenderweise besitzen die erfindungsgemäßen Phenoxypropionylphosphonsäureester der Formel (I) wesentlich bessere herbizide Eigenschaften als der aus dem Stand der Technik bekannte 2-[4-(2,4-Dichlorphenoxy)-phenoxy]-propionsäuremethylester, welcher ein hochwirksamer Wirkstoff gleicher Wirkungsart ist.

Die erfindungsgemäßen Phenoxypropionylphosphonsäureester sind durch die Formel (I) eindeutig definiert. In dieser Formel steht $X^1$ vorzugsweise für Chlor oder Trifluor-

methyl. $X^2$ steht vorzugsweise für Wasserstoff, Chlor oder Trifluormethyl. Z steht vorzugsweise für Stickstoff, eine -CH- oder -CCl-Gruppierung, und R steht vorzugsweise für Alkyl mit 1 bis 4 Kohlenstoffatomen oder Halogenalkyl mit 1 bis 4 Kohlenstoffatomen und 1 bis 5 Halogenatomen, insbesondere Chloratomen.

Verwendet man 2-[4-(3,5-Dichlor-pyridinyl-2-oxy)-phenoxy]-propionsäurechlorid und Triethylphosphit als Ausgangsstoffe, so kann der Verlauf des erfindungsgemäßen Verfahrens durch das folgende Formelschema wiedergegeben werden:

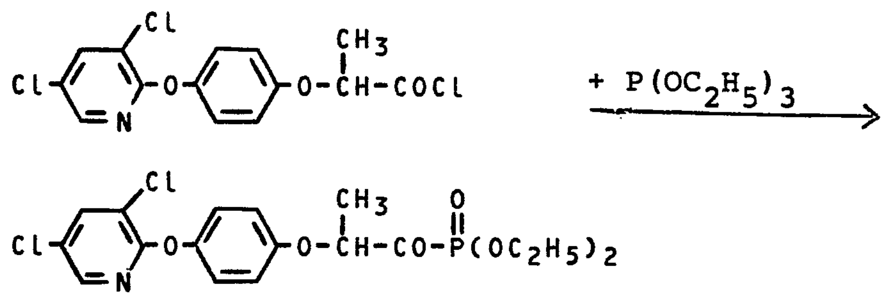


Die bei dem erfindungsgemäßen Verfahren als Ausgangsstoffe benötigten Phenoxypropionsäurechloride sind durch die Formel (II) definiert. In dieser Formel haben $X^1$, $X^2$ und Z vorzugsweise diejenigen Bedeutungen, die bereits im Zusammenhang mit der Beschreibung der erfindungsgemäßen Stoffe der Formel (I) vorzugsweise für diese Reste genannt wurden.

Als Beispiele für Verbindungen der Formel (II) seien im einzelnen genannt:

2-/4-(4-Trifluormethyl-phenoxy)-phenoxy7, 2-/4-(2,4-Dichlorphenoxy)-phenoxy7-, 2-/4-(4-Chlor-2-trifluormethyl-phenoxy)-phenoxy7-, 2-/4-(2,6-Dichlor-4-trifluormethyl-phenoxy)-phenoxy7-, 2-/4-(2-Chlor-4-trifluormethyl-phenoxy)-phenoxy7-, 2-/4-(3,5-Dichlor-pyridyl-2-oxy)-phenoxy7-, 2-/4-(3-Chlor-5-trifluormethyl-pyridyl-2-oxy)-phenoxy7- und 2-/4-(5-Trifluormethyl-pyridyl-2-oxy)-phenoxy7-propionsäurechlorid.

Die Verbindungen der Formel (II) sind bekannt oder können auf bekannte Weise durch Umsetzung der entsprechenden Phenoxypropionsäuren der Formel (IV),

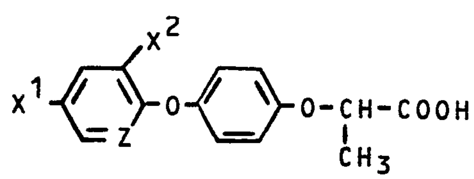

(IV)

in welcher

$X^1$, $X^2$ und Z die oben angegebenen Bedeutungen haben,

mit Chlorierungsmitteln, wie z.B. Thionylchlorid, gegebenenfalls in Gegenwart inerter Verdünnungsmittel, wie z.B. Tetrachlormethan und gegebenenfalls unter Verwendung von Katalysatoren, wie z.B. Dimethylformamid, bei Temperaturen zwischen 20°C und 80°C erhalten werden (vgl. Deutsche Offenlegungsschriften 22 23 894,

24 33 067, 25 46 251, 26 46 124, 26 28 384, 28 02 818 und Europäische Offenlegungsschriften 483 und 1473).

Die für die Herstellung der Phenoxypropionsäurechloride der Formel (II) als Ausgangsstoffe benötigten Phenoxypropionsäuren der Formel (IV) sind bekannt.

Die beim erfindungsgemäßen Verfahren weiterhin als Ausgangsstoffe benötigten Phosphorigsäureester sind durch die Formel (III) definiert. In dieser Formel hat R vorzugsweise diejenigen Bedeutungen, die bereits im Zusammenhang mit der Beschreibung der erfindungsgemäßen Stoffe der Formel (I) vorzugsweise genannt wurden.

Als Beispiele für die Verbindungen der Formel (III) seien im einzelnen genannt:

Trimethyl-, Triethyl-, Tri-n-propyl-, Tri-iso-propyl-, Tri-n-butyl-, Tri-i-butyl-, Tri-(2-chlorethyl)-, Tri-(1-chlor-n-propyl)-, Tri-(2-chlor-n-propyl)-, Tri-(3-chlor-n-propyl)-, Tri-(2-chlor-n-butyl)-, Tri-(3-chlor-n-butyl)- und Tri-(4-chlor-n-butyl)-phosphit.

Die Phosphorigsäureester der Formel (III) sind bekannt (vgl. Houben-Weyl "Methoden der organischen Chemie", Band 12/2, Seiten 53-78, Thieme-Verlag Stuttgart, 1964).

Das erfindungsgemäße Verfahren zur Herstellung der neuen Phenoxypropionylphosphonsäureester der Formel (I) wird bevorzugt unter Verwendung von Verdünnungsmitteln durchgeführt. Als Verdünnungsmittel kommen dabei praktisch alle inerten organischen Lösungsmittel in Frage. Hierzu gehören vorzugsweise aromatische Kohlenwasserstoffe, wie z.B. Benzol, Toluol und Xylol und Ether, wie z.B. Diethyl- und Diisopropylether, Tetrahydrofuran, Dioxan und 1,2-Dimethoxyethan.

Die Reaktionstemperatur kann beim erfindungsgemäßen Verfahren zur Herstellung der neuen Verbindungen der Formel (I) innerhalb eines größeren Bereiches variiert werden. Im allgemeinen arbeitet man jeweils bei Temperaturen zwischen -20°C und +150°C, vorzugsweise zwischen 0°C und +100°C. Das erfindungsgemäße Verfahren wird im allgemeinen unter Normaldruck durchgeführt.

Zur Durchführung des erfindungsgemäßen Verfahrens setzt man je Mol der Verbindung der Formel (II) im allgemeinen zwischen 0,5 und 2,0 Mol, vorzugsweise zwischen 0,9 und 1,5 Mol Phosphorigsäureester der Formel (III) ein. Die Komponenten werden gewöhnlich unter leichter Außenkühlung zusammengegeben, und das Reaktionsgemisch wird bis zum Reaktionsende gerührt. Dann werden flüchtige Komponenten unter vermindertem Druck abdestilliert, wobei die Produkte der Formel (I) als Rückstand verbleiben. Eine Reinigung kann durch kurzzeitiges Erhitzen unter vermindertem Druck ("Andestillieren") erzielt werden.

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

<u>Monokotyle Kulturen der Gattungen:</u> Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst-, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die erfindungsgemäßen Wirkstoffe können im Vor- und Nachauflauf selektiv zur Gräserbekämpfung in Kulturen wie z.B. Rüben, Baumwolle, Sojabohnen, Kartoffeln und Getreide eingesetzt werden.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoffimprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z. B. Ammoniumsalze und natürliche Gesteinsmehle, wie Kaoline, Tonerden, Talkum, Kreide, Quarz, Attapulgit,

Montmorillonit oder Diatomeenerde und synthetische Gesteinsmehle, wie hochdisperse Kieselsäure, Aluminiumoxid und Silikate als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch als Mischungen mit bekannten Herbiziden zur Unkrautbekämpfung Verwendung finden, wobei Fertigformulierung oder Tankmischung möglich ist.

Für die Mischungen kommen bekannte Herbizide wie zum Beispiel 1-Amino-6-ethylthio-3-(2,2-dimethylpropyl)-1,2,5-triazin-2,4-(1H, 3H)-dion oder N-(2-Benzthiazolyl)-N,N'-dimethyl-harnstoff zur Unkrautbekämpfung in Getreide, 4-Amino-3-methyl-6-phenyl-1,2,4-triazin-5-(4H)-on zur Unkrautbekämpfung in Zuckerrüben und 4-Amino-6-(1,1-dimethyl)-3-methylthio-1,2,4-triazin-5-(4H)-on zur Unkrautbekämpfung in Sojabohnen in Frage. Einige der Mischungen zeigen überraschenderweise auch synergistische Wirkung.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver und Granulate angewandt werden. Die Anwendung geschieht in üblicher Weise, z.B. durch Gießen, Spritzen, Sprühen, Streuen.

Die erfindungsgemäßen Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in größeren Bereichen schwanken. Sie hängt im wesentlichen von der Art des gewünschten Effektes ab. Im allgemeinen liegen die Aufwandmengen zwischen 0,05 und 10 kg Wirkstoff pro ha, vorzugsweise zwischen 0,1 und 5 kg/ha.

Die Herstellung und die Verwendung der erfindungsgemäßen Stoffe geht aus den nachfolgenden Beispielen hervor:

0138158

Beispiel 1

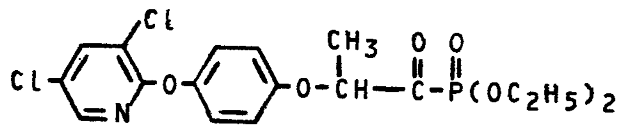

Eine Lösung von 14,3 g (0,04 Mol) 2-/4-(3,5-Dichlorpyridyl-2-oxy)-phenoxy7-propionsäurechlorid in 60 ml Diethylether wurde unter Kühlung mit Eis zu einer Lösung von 6,7 g (0,04 Mol) Triethylphosphit in 80 ml Diethylether tropfenweise gegeben. Das Reaktionsgemisch wurde 72 Stunden bei 20°C gerührt und dann 9 Stunden unter Rückfluß erhitzt. Nach Einengen im Wasserstrahlvakuum wurden die restlichen flüchtigen Komponenten bei 60°C/1 mm Hg entfernt.

Man erhielt auf diese Weise 14,1 g (79 % der Theorie) 2-/4-(3,5-Dichlor-pyridyl-2-oxy)-phenoxy7-propionylphosphonsäurediethylester vom Brechnungsindex $n_D^{20}$:1,5429.

Analog Beispiel 1 wurden die folgenden Verbindungen der Formel (I) erhalten:

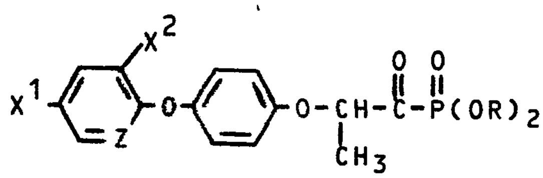

(I)

| Beisp. Nr. | $X^1$ | $X^2$ | Z | R | Brechungsindex $n_D^{20}$ |
|---|---|---|---|---|---|
| 2 | $CF_3$ | H | CH | $CH_3$ | 1,5032 |
| 3 | $CF_3$ | H | CH | $C_2H_5$ | 1,4905 |
| 4 | Cl | Cl | N | $CH_3$ | |
| 5 | Cl | Cl | N | $C_3H_7$ | |
| 6 | Cl | Cl | N | $-CH_2CH_2Cl$ | |
| 7 | $CF_3$ | H | N | $CH_3$ | 1,5043 |
| 8 | $CF_3$ | Cl | N | $CH_3$ | |
| 9 | $CF_3$ | H | N | $C_2H_5$ | 1,4909 |
| 10 | $CF_3$ | Cl | N | $C_2H_5$ | |

Herstellung von Ausgangsstoffen der Formel (II):

Beispiel (II-1)

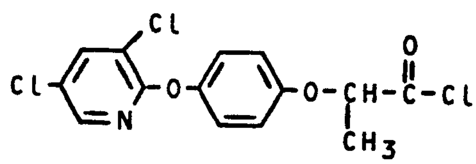

Eine Mischung aus 25,6 g (0,07 Mol) 2-/4-(3,5-Dichlor-pyridyl-2-oxy)-phenoxy/-propionsäure, 26 g (0,22 Mol) Thionylchlorid und einem Tropfen Dimethylformamid wurde 15 Stunden unter Rückfluß erhitzt.

Anschließend wurden die flüchtigen Komponenten bei 60°C/1 mm Hg entfernt.

Man erhielt auf diese Weise 14,3 g (59 % der Theorie) 2-/4-(3,5-Dichlor-pyridyl-2-oxy)-phenoxy7-propionsäurechlorid.

Analog Beispiel (II-1) erhielt man die folgende Verbindung der Formel (II)

Beispiel (II-2)

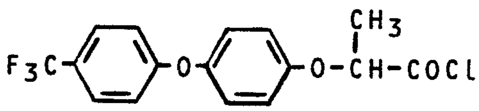

Kp = 182°C bis 185°C/2 mm Hg

Verwendungsbeispiel:

In dem nachstehend beschriebenen biologischen Test wurde die folgende Verbindung als Vergleichssubstanz eingesetzt:

(A) 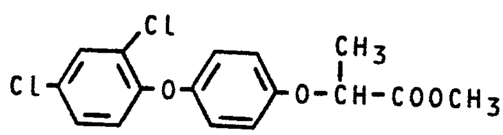

2-/4-(2,4-Dichlorphenoxy)-phenoxy7-propionsäuremethylester
(bekannt aus DE-OS 22 23 894)

Beispiel A

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.
Es bedeuten:

0 % = keine Wirkung (wie unbehandelte Kontrolle)
100 % = totale Vernichtung

In diesem Test zeigt der erfindungsgemäße Wirkstoff (1) bei der Bekämpfung von Alopecurus, Digitaria, Echinocloa, Setaria und Sorghum in Rüben eine bessere selektive herbizide Wirksamkeit als die Vergleichssubstanz (A).

Patentansprüche

1. Phenoxypropionylphosphonsäureester der Formel

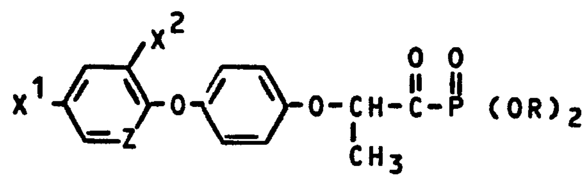

(I)

in welcher

$X^1$ für Halogen oder Trifluormethyl steht,

$X^2$ für Wasserstoff, Halogen oder Trifluormethyl steht,

Z für Stickstoff, eine -CH- oder -CCl-Gruppierung steht und

R für Alkyl oder Halogenalkyl steht.

2. Phenoxypropionylphosphonsäureester der Formel (I), in denen

$X^1$ für Chlor oder Trifluormethyl steht,

$X^2$ für Wasserstoff, Chlor oder Trifluormethyl steht,

Z für Stickstoff, eine -CH- oder -CCl-Gruppierung steht und

R für Alkyl mit 1 bis 4 Kohlenstoffatomen oder Halogenalkyl mit 1 bis 4 Kohlenstoffatomen und 1 bis 5 Halogenatomen steht.

3. Verfahren zur Herstellung von Phenoxypropionylphosphonsäureestern der Formel

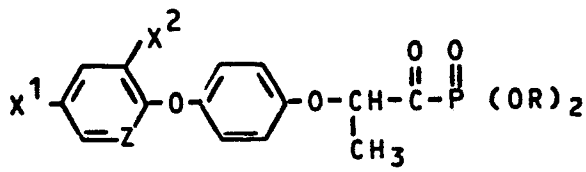

(I)

in welcher

$X^1$ für Halogen oder Trifluormethyl steht,

$X^2$ für Wasserstoff, Halogen oder Trifluormethyl steht,

Z für Stickstoff, eine -CH- oder -CCl-Gruppierung steht und

R für Alkyl oder Halogenalkyl steht,

dadurch gekennzeichnet, daß man Phenoxypropionsäurechloride der Formel

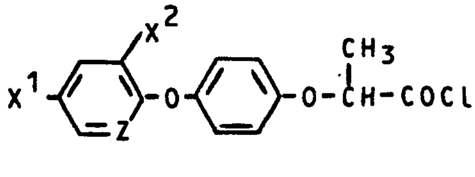

(II)

in welcher
$X^1$, $X^2$ und Z die oben angegebenen Bedeutungen haben,

mit Phosphorigsäureestern der Formel (III),

$$P(OR)_3 \qquad (III)$$

in welcher
R die oben angegebene Bedeutung hat,

gegebenenfalls in Gegenwart von Verdünnungsmitteln umsetzt.

4. Herbizide Mittel, gekennzeichnet durch einen Gehalt an mindestens einem Phenoxypropionylphosphonsäureester der Formel (I).

5. Verfahren zur Bekämpfung von Unkräutern, dadurch gekennzeichnet, daß man Phenoxypropionylphosphonsäureester der Formel (I) auf die Unkräuter und/oder deren Lebensraum ausbringt.

6. Verwendung von Phenoxypropionylphosphonsäureestern der Formel (I) zur Bekämpfung von Unkräutern.

7. Verfahren zur Herstellung von herbiziden Mitteln, dadurch gekennzeichnet, daß man Phenoxypropionylphosphonsäureester der Formel (I) mit Streckmitteln und/oder oberflächenaktiven Stoffen vermischt.

8. Phenoxypropionylphosphonsäureester der Formel

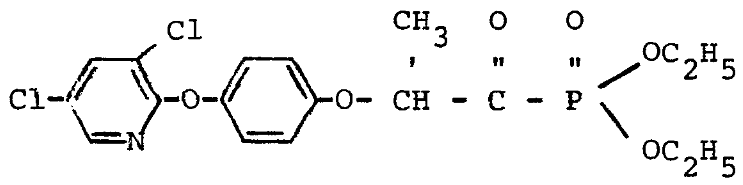

9. Phenoxypropionylphosphonsäureester der Formel

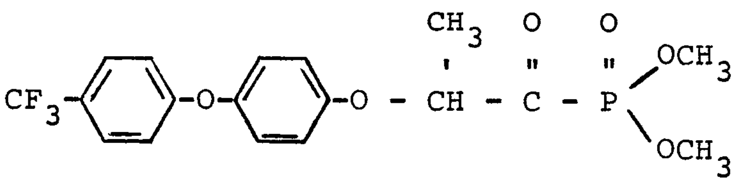

1o. Phenoxypropionylphosphonsäureester der Formel

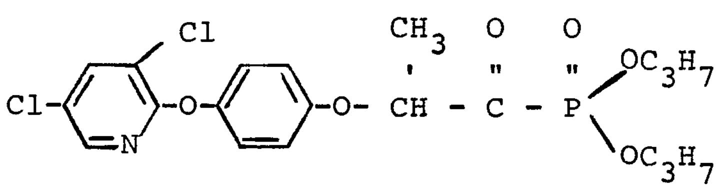

Europäisches Patentamt

**EUROPÄISCHER RECHERCHENBERICHT**

0138158

Nummer der Anmeldung

EP 84 11 1851

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 034 883 (MOBIL OIL CO.) * Seiten 10,11, Spalte E; Seite 37; Ansprüche * --- | 1,4-7 | C 07 F 9/40<br>C 07 F 9/58<br>A 01 N 57/18 |
| Y | US-A-3 664 822 (D.W. GIER) * Insgesamt * --- | 1,4-7 | |
| Y | EP-A-0 073 040 (SUMITOMO CHEMICAL CO.) * Ansprüche * ----- | 1,4-7 | |
| | | | RECHERCHIERTE SACHGEBIETE (Int. Cl.4) |
| | | | C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 11-01-1985 | BESLIER L.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82